# EUROPEAN PATENT SPECIFICATION

(11) **EP 3 918 408 B1**
(45) Date of publication and mention of the grant of the patent: **12.08.2026**
(21) Application number: 19836580.1
(22) Date of filing: 20.12.2019
(51) Int. Cl.: G02B 27/01, G02B 27/00

(54) **LIGHT-FIELD MIXED REALITY SYSTEM WITH CORRECT MONOCULAR DEPTH CUES TO A VIEWER**
LICHTFELDSYSTEM MIT GEMISCHTER REALITÄT MIT KORREKTEN MONOKULAREN TIEFENINFORMATIONEN FÜR EINEN BETRACHTER
SYSTÈME DE RÉALITÉ MIXTE À CHAMP LUMINEUX AYANT DES REPÈRES DE PROFONDEUR MONOCULAIRE CORRECTS POUR UN SPECTATEUR

(30) Priority: 31.01.2019 EP 19154832
(43) Date of publication of application: 08.12.2021
(73) Proprietor: CREAL SA, 1024 Ecublens VD (CH)
(72) Inventor: SLUKA, Tomas, 1012 Lausanne (CH); KILCHER, Lucio, 1090 La Croix (Lutry) (CH)
(74) Representative: P&TS SA (AG, Ltd.)
(86) International application number: PCT/IB2019/061156
(87) International publication number: WO 2020/157562

(56) References cited:
- WO-A1-2018/091984
- WO-A1-2018/165117
- WO-A2-2006/041596
- WO-A2-2015/095737
- WO-A2-2018/057660
- DE-A1- 102014 013 320
- ANDREW MAIMONE ET AL: "Pinlight displays", ACM TRANSACTIONS ON GRAPHICS, ACM, NY, US, vol. 33, no. 4, 27 July 2014 (2014-07-27), pages 1 - 11, XP058051956, ISSN: 0730-0301, DOI: 10.1145/2601097.2601141

## Description

### Field

The present disclosure relates to an optical combiner for mixing artificially created light-field and real world light-field. The present disclosure further relates to a near-eye light-field mixed reality system.

### Description of related art

Mixed reality hardware is supposed to deliver to the human eyes real world images together with artificially generated images which need to be combined by a so called combiner. Such combiner comprises an optical element which is transparent for the light from the real world, i.e. it lets the outside light pass to an observer's eye pupil, while it guides an artificially created light-field of a virtual image from an image making element, to the observer's pupil as well. Such an image making element can be a display or a projector. The real and artificial light-fields need to be combined ideally in such a way that the observer can see the real and virtual objects without visual conflict. This requires that different virtual objects in artificially created images can be displayed in different arbitrary focal distances. This feature is not yet properly solved today.

An eye contains a variable lens which - in an actual world - must be focused on the distance of the observed object in order to project its sharp image on an eye retina. Objects in another distances are out of focus and their image on the retina is blurred. The conventional 3D displays and projectors however provide an image to each eye from a planar screen or by a direct retinal projection using a scanning laser beam or a light-field with almost zero aperture of the exit pupil. The former requires that an eye is focused on the distance of the optical image of the planar screen in an optical system.

Here and hereafter, the term "optical image" means the apparent position of an object as seen through an optical system. Pictures displayed on the planar screen are either all sharp or a blur is already present in them and cannot be unblurred with the eye accommodation. When an eye focuses on any other distance than that of the optical image of the display, the retinal image of the displayed pictures is blurred. The retinal projection creates an always-in-focus image of the projected picture on a retina and the eye accommodation influences only the image size and position. An always-in-focus light-field carries shadows of all imperfections such as dust speckles, eye lashes, and eye floaters in the optical path.

Several concepts to create correct monocular depth cues in an artificially projected light-field of a 3D scene were suggested; including (i) holographic displays; (ii) near-eye projectors with fast varifocal optical elements such as variable lenses or bending mirrors combined with fast displays such as Digital Micromirror Device (DMD); (iii) displays with optics which actively controls the distance of the optical image of the display and creates corresponding blur in the displayed pictures according to the measured or estimated focal length of an eye; (iv) displays, which spatially multiplex displayed pictures by a microlens array or point-light array backlight, or (v) optical path length expander combiners or multi-layer waveguides providing images in two or three focal distances.

Each of these concepts have certain advantages and disadvantages. (i) Holographic displays are, in theory, able to provide full correct light-field of an artificial 3D scene, but they suffer from diffraction and chromatic artifacts, require a large amount of input data, coherent light sources, and high-resolution phase and amplitude modulation of light. (ii) The fast varifocal lenses and mirrors are delicate components and their optical properties suffer from optical imperfections. (iii) Displays with actively controlled distance of the optical image of a screen and the artificial blur in the displayed pictures requires measurement or estimation of a focal length of an eye and the consequent adaptation of the projector optics and digital blur. This concept suffers from measurement errors complicated by differences between individual eyes, and it indeed does not provide a correct light-field, it only imitates the effects of a light-field. For instance it is unable to provide correct micro-parallax effect to rapidly moving eye. (iv) Achieving commercially attractive image resolution with the concept of spatial multiplexing of images by microlens array or point-light backlight with transparent spatial light modulator requires special small pitch high-resolution displays because each image point of an artificial scene is displayed multiple-times at the same moment in order to make the blur in the retinal image correctly dependent on the focal length of an eye. Their use as see-through displays in augmented reality applications is complicated by the fact that the microlens array concept includes a non-transparent display and the point-light array concept is bulky. (v) Optical path expanders and multilayer waveguides create images in small number of focal planes such as two or three and require deliberate switching of the displayed images between the focal planes which creates visible artifacts.

Multiple other concepts based on temporal multiplexing of images with nematic liquid crystal or organic light emitting diode displays suffer from small refresh times of these displays.

The most used type of mixed reality combiners are based on waveguides with holographic grating which provide images in a fixed focal plane (a stack of waveguides can be used to provide multiple focal planes), dome shape semi-transparent mirrors with a beam splitter or an ellipsoid combiner. An ellipsoid combiner has not been used for light-fields so far. The common feature of these combiners is, that they place an image of a flat display to certain fixed distance.

WO2018091984A1 discloses fundamental mechanisms of sequential light-field projection with several embodiments of possible combiners for mixing the artificial light-field with the real-world light.

WO15095737 discloses a near-eye optical see-through display. The display includes a backlight layer including a plurality of point light sources. The display further includes a spatial light modulator (SLM) layer for modulating light from the point light sources.

Reference Andrew Maimone et. al., "Pinlight Displays: Wide Field of View Augmented Reality Eyeglasses using Defocused Point Light Sources", ACM Transaction on Graphics, Vol. 33, No. 4, Article 89, July 2014, discloses an optical see-through augmented reality display that offers a wide field of view and supports a compact form factor approaching ordinary eyeglasses.

### Summary

The present disclosure relates to electronic and optic devices which project digitally processed information to the eyes of a user and mix them with the real world light. More specifically it relates to a light-field mixed reality system which create a pin-light array of a virtual scene and project a corresponding virtual light-field from close proximity of the eyes to the eyes while the projected virtual light-field is superimposed with the natural light entering the eyes from the real world. Here, close proximity can be seen as a distance of less than 15 cm between the projected corresponding virtual light-field and the eyes.

A light-field mixed reality system according to the invention is defined in appended claim 1.

The projected virtual light-field has such properties that the receiving eye can naturally change focus on different distances of objects in the projected visual scene as well as in the real world and can observe their realistic blur and depth of field. The projected virtual light-field produced by the light-field mixed reality system provides images with correct monocular depth cues to a viewer.

The light-field mixed reality system generates the projected virtual light-field by temporal-multiplexing and sequential projection of plurality of always-in-focus light-field components into a pupil of a viewer. Due to the natural vision latency, the viewer perceives composed light-field and experiences realistic monocular depth cues such as a correct eye accommodation and the associated image blur. This allows visual mixing of virtual and real objects without visual conflicts.

In particular, the present disclosure relates to a light-field mixed reality system to be worn by a viewer, comprising: a pin-light array generating an incident light-field illuminating a spatial light modulator; the spatial light modulator being configured for modulating the incident light-field and generating a modulated virtual light-field; and a combiner configured for reflecting the modulated virtual light-field and projecting a projected virtual light-field defining an eye box region along a projection axis. The combiner is further configured to transmit natural light from the real world towards the eye box, such that both projected virtual light-field and natural light are projected, via the combiner, within the eye box.

The projected virtual light-field further forms an exit pupil of the pin-light array comprising a plurality of pin-light virtual images, within the eye box and a virtual image of the spatial light modulator, along the projection axis. The system either:
comprises a lens configured to collimate and reimage the pin-light array and, when the light-field mixed reality system is worn by the viewer, form the virtual image in front of the exit pupil, namely at a distance less than 15 cm from the exit pupil between the combiner and the exit pupil; or
comprises a lens configured to collimate and reimage the pin-light array, and a SLM reimaging lens configured to, when the light-field mixed reality system is worn by the viewer, form a first virtual image between the SLM and the combiner, and form the virtual image behind the exit pupil, namely away from the exit pupil in a direction opposed to the combiner.

The combiner combines the virtual light-field having realistic monocular depth cues, which creates viewer's perception of the realistic finite depth of field and correct accommodation in an artificially generated 3D scene, with the real world light. The light-field mixed reality system provides practically infinite and almost continuous range of depths, high image resolution, low image persistence, is doable with reliable currently mass produced components, and it can be embedded in a small form-factor glasses for mixed reality applications.

The light-field mixed reality system is able to provide mixed reality experience to the eyes of any human, animal or a camera.

A user of the light-field mixed reality system can experience realistic mixing of real and virtual 3d scenes. The light-field mixed reality system is suitable for delivering 3D virtual and augmented reality information with the comfort of the correct eye accommodation.

The present disclosure further relates also to a wearable device comprising the light-field mixed reality system, the wearable device having a small form factor and can be used as everyday wearable eyewear which superimposes contextual digital information into the naturally observed real world.

### Brief Description of the Drawings

The invention will be better understood with the aid of the description of an embodiment given by way of example and illustrated by the figures, in which:
Fig. 1 shows a light-field mixed reality system for mixed reality applications comprising a combiner, according to an embodiment, not according to the claimed invention;
Fig. 2a illustrates the light-field mixed reality system, according to another embodiment;
Fig. 2b illustrates the light-field mixed reality system, according to a variant of the embodiment of Fig. 2a;
Fig. 2c shows the light-field mixed reality system, according to another embodiment;
Fig. 3 shows the light-field mixed reality system, according to yet another embodiment;
Fig. 4a illustrates a variant of the light-field mixed reality system configuration of Fig. 3, not in accordance with the claimed invention;
Fig. 4b represents an array of mirrors comprised in the combiner according to an embodiment;
Fig. 5 shows the light-field mixed reality system, according to yet another embodiment, not in accordance with the claimed invention;
Fig. 6 shows a variant of the light-field mixed reality system configuration of Fig. 5;
Fig. 7 shows another variant of the light-field mixed reality system configuration of Fig. 5;
Fig. 8 depicts another variant of the light-field mixed reality system configuration of Fig. 3;
Fig. 9 depicts yet another variant of the light-field mixed reality system configuration of Fig. 5;
Figs. 10 and 11 illustrate the mixed reality glasses comprising the light-field mixed reality system, according to another embodiment;
Fig. 12 illustrates a configuration of mixed reality glasses comprising the light-field mixed reality system, according to an embodiment;
Fig. 13 illustrates the light-field mixed reality system, according to yet another embodiment;
Fig. 14a is a diagram representation of the light-field mixed reality system comprising an eye-tracking device, according to an embodiment;
Figs. 14b and 14c show the light-field mixed reality system when the viewer's eye is oriented downwards, close to the system (Fig. 14b) and farther from the system (Fig. 14c);
Figs. 14d and 14e show the light-field mixed reality system when the viewer's eye is oriented upwards, close to the system (Fig. 14d) and farther from the system (Fig. 14e);
Fig. 14f shows a combined representation of Figs 14a-14d;
Figs. 15a to 15e show the light-field mixed reality system comprising the eye-tracking device configured to take account of the field of view of the viewer; and
Figs. 16a-16c show the light-field mixed reality system wherein the combiner comprises a moving eye-box including micro-mirrors.

### Detailed Description of possible embodiments

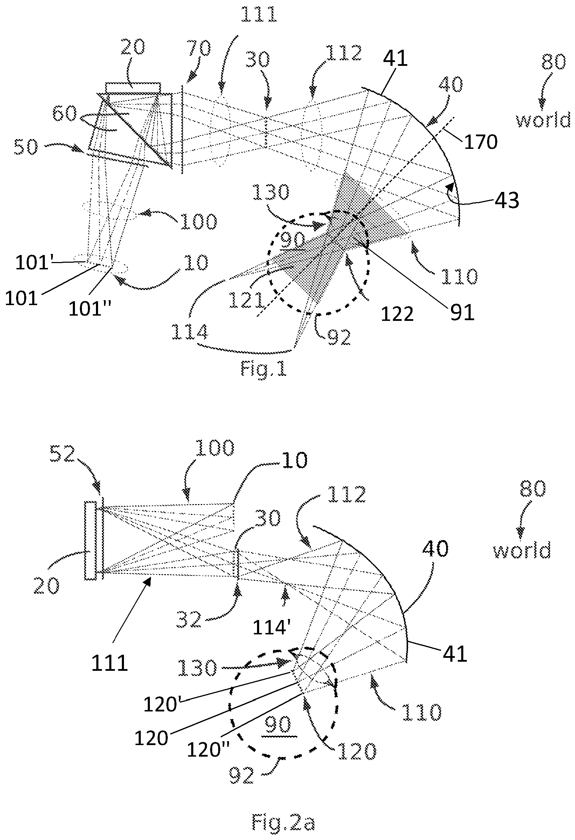

**Fig.** 1 shows a light-field mixed reality system to be worn by a viewer for mixed reality applications, not being covered by the claimed subject-matter. The light-field mixed reality system a pin-light array 10 generating an incident light-field 100 illuminating a spatial light modulator (SLM) 20. The incident light-field 100 typically comprises a plurality of incident pinhole-aperture light-fields (three incident pinhole-aperture light-fields 101, 101', 101" are represented in Fig. 1). The spatial light modulator 20 is configured for modulating the incident light-field 100 and generating a modulated virtual light-field 111.

The pin-light array 10 emits light in the visible range of the electromagnetic spectrum but it could also emits light outside of the visible range of the electromagnetic spectrum, as example in the Near Infrared (NIR) or Ultraviolet (UV) range of the electromagnetic spectrum. The pin-light array 10 can emits coherent or incoherent light. Typical light sources that can be used for the pin-light array 10 include LED, VCSEL or LD. The pin-light array 10 can be a single emitter or multiple emitters grouped in a predefined spatial configuration as a matrix configuration. The pin-light array 10 can emit light with a defined divergence or Numerical Aperture (NA).

The light-field mixed reality system can further comprise an optional Fourier filter 30. The polarization filtering can be provided by solid-state filter as well instead of polarization prism.

The Fourier filter 30 can be configured to remove higher than zero-order diffraction components from the modulated virtual light-field 111, that is reflected and diffracted on the SLM 20, and generates a modulated and filtered virtual light-field 112.

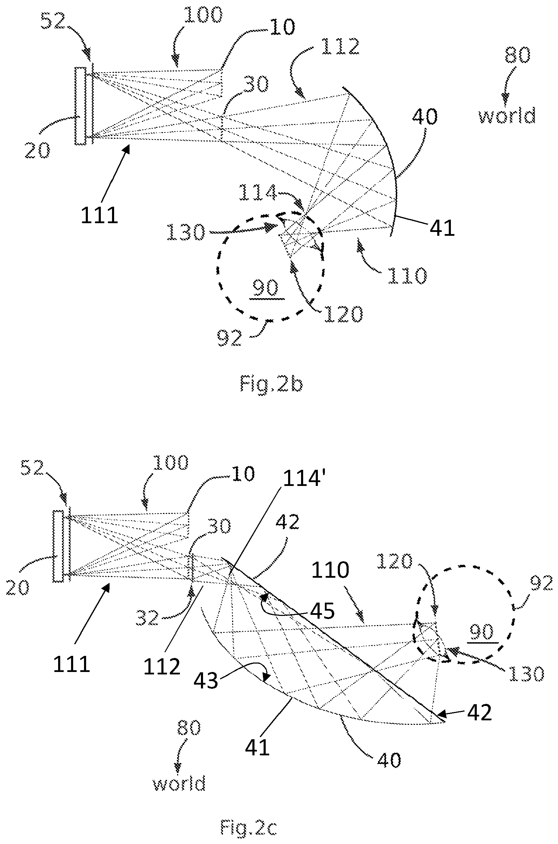

The light-field mixed reality system further comprises a combiner 40 configured for reflecting the modulated and filtered virtual light-field 112 and projecting a projected virtual light-field 110 defining an eye box region 121 along a projection axis 170. The projected virtual light-field 110 forms a pin-light virtual image aperture, corresponding to an exit pupil 122, within the eye box 121. The exit pupil 122 comprises a plurality of pin-light virtual images 120 (three pin-light virtual images 120, 120', 120" are represented in Fig. 2) corresponding to the incident pinhole-aperture light-fields 101. The exit pupil 122 is defined by the position of the array of pin-light virtual images 120. The exit pupil 122 should be wide enough that the projected virtual light-field 110 enters at least partly an eye pupil. The exit pupil 122 can be larger than the eye pupil in order to project at least part of the projected virtual light-field 110 into the pupil even in the case the pupil is moving relatively to the combiner 40.

The projected virtual light-field 110 further forms a virtual image 114 of the SLM 20 along the projection axis 170.

The exit pupil 122 within the eye box 121 can be displaced laterally, i.e. in a direction perpendicular to the projection axis 170, by selecting a given pin-light virtual image 120 or given pin-light virtual images 120 in the pin-light array 10.

The SLM 20 can comprise uses a digital micromirror device (DMD), a ferroelectric liquid crystal on silicon (FLCOS) or any other suitable spatial modulator of light intensity and phase.

In the embodiment of Fig. 1, the light-field mixed reality system is configured such that the virtual image 114 is formed, along the projection axis 170, away from the exit pupil 122 in a direction opposed to the combiner 40.

In Fig. 1, an eye 90 of the viewer is further represented. When the light-field mixed reality system is worn by the viewer, the exit pupil 122 is formed within the viewer's eye 90 and the virtual image 114 is formed out of the accommodation range of the viewer's eye 90. For example, in Fig. 1 the virtual image 114 is formed far behind the viewer's eye 90..

The combiner 40 is further configured for transmitting natural light from the real world 80 towards the eye box 121 such that both projected virtual light-field 110 and natural light 80 are projected, via the combiner 40, within the eye box 121.

When the light-field mixed reality system is worn by the viewer, the combiner 40 transmits natural light from the real world 80 towards the viewer's eye 90. The combiner 40 is thus allows both projected virtual light-field 110 and natural light 80 to be projected towards the viewer's eye 90, e.g. to the pupil 130 of the viewer's eye 90, such that both projected virtual light-field 110 and light from the real world 80 are projected on the retina 92.

In an embodiment, the combiner 40 can comprise a semi-transparent first element 41 including a first reflecting surface 43 having a concave and ellipsoid shape. In such configuration, the modulated and filtered virtual light-field 112 is incident at a first focal point and the projected virtual light-field 110 is reflected at the second focal point. The second focal point allows the projected virtual light-field 110 to be reflected towards the viewer's eye 90.

The combiner 40 is depicted in 2D plane but concrete realization may use folding in all three dimensions. The combiner 40 is can comprise a general free-form surface.

In the embodiment of Fig. 1, the light-field mixed reality system can comprise a collimator 50, e.g., a collimating or partly collimating lens, a beam splitter 60 and a reimaging lens 70. The beam splitter 60 can comprise a total internal reflection prism (TIR) in case the SLM 20 uses a DMD, or a polarization prism in case the SLM 20 uses a FLCOS. The reimaging lens 70 is configured for forming the virtual image 114 ) in a position along the projection axis 170, away from the exit pupil 122 in a direction opposed to the combiner 40, in other words, in a position away from the exit pupil 120 in a direction opposed to the combiner 40. When the light-field mixed reality system is worn by the viewer, the virtual image 114 is positioned out of the accommodation range of the viewer's eye 90.

Note that in Fig. 1, only the position of the viewer's eye 90 is depicted. The distortion of the projected virtual light-field 110 on the eye's lens 91 is not illustrated. The optics, namely the position and focal lengths of the combiner 40, and possibly, the position and focal lengths of the collimator 50, the re-imaging lens 70, as well as positions of the SLM 20, put the image of the SLM 20 determine the position of the virtual image 114. For example, the virtual image 114 can be far behind the viewer's eye 90 (corresponding to the illustration in Fig. 1) or near the eye 90, such as less than about 15 cm in front of the viewer's eye 90 (see Fig. 2b). The virtual image 114 must be out of accommodation range of the viewer, otherwise it would create a distinct plane were the image would look different from images in other distances.

The optics puts exit pupil 122 of the pin-light array 10 near the observer's eye-pupil 130, ideally inside the viewer's eye 90.

The combiner 40 can be tuned to reflect narrow spectral bands of the modulated and filtered virtual light-field 112 such as the wavelengths of red, green and blue colors while it transmits all or most of the other visible wavelengths from the real world 80.

**Fig. 2a** illustrates the light-field mixed reality system according to another embodiment, wherein the near-eye light-field projector does not comprise the beam splitter 60. Instead of the beam splitter 60, a lens 52 is configured to combine the simultaneous functions of a collimator and of a pin-light array reimaging element. The near-eye light-field projector further comprises the optional Fourier filter 30 and a SLM reimaging lens 32. The SLM reimaging lens 32 is configured for forming a first virtual image 114' of the SLM 20 before the combiner 40 (between the SLM 20 and the combiner 40). The first focal point of the ellipsoid-shaped combiner 40 is located at the center of the virtual image 114. In this configuration, the SLM reimaging lens 32 places the exit pupil 122 inside the viewer's eye 90. The virtual image is formed along the projection axis 170, away from the exit pupil 122 in a direction opposed to the combiner 40. The virtual image is not represented in Fig. 2a but should be seen in the projection of the projected virtual light-field 110 (such as in Fig. 1).

When the light-field mixed reality system is worn by the viewer, the virtual image is formed far behind the viewer's eye 90, out of the accommodation range of the viewer's eye 90.

**Fig. 2b** illustrates the light-field mixed reality system according to a variant of the embodiment of Fig. 2a, wherein the near-eye light-field projector does not comprise the SLM reimaging lens 32. The light-field mixed reality system comprises a lens 52 combining the functions of a collimator and a pin-light array reimaging element, configured for forming the virtual image 114 out of the accommodation range of the viewer's eye 90. In this configuration, the virtual image 114 is formed, along the projection axis 170, between the combiner 40 and the exit pupil 122. For example, the virtual image 114 can be formed, along the projection axis 170, at a distance less than 15 cm, preferably a distance less than 10 cm, from the exit pupil 122.

When the light-field mixed reality system is worn by the viewer, the virtual image 114 is located close and in front of the viewer's eye 90, for example less than 5 cm the viewer's eye, out of the accommodation range of the viewer's eye 90.

**Fig. 2c** shows another embodiment of the light-field mixed reality system, wherein the combiner 40 further comprises a semi-transparent second element 42 having a substantially flat semi-transparent reflecting surface 45. The modulated and filtered virtual light-field 112 coming from the SLM reimaging lens 32 is reflected on the reflecting surface 45 of the second element 42, towards the first reflecting surface 43 of the concave and ellipsoid-shaped first element 41. This configuration of the combiner 40 allows for transmitting light from the real world 80 and reflecting the reflected projected virtual light-field 110 from the modulated and filtered virtual light-field 112 such as to form the exit pupil 122. In this configuration, a first virtual image 114' is formed close to the second element 42. The virtual image is formed along the projection axis 170, away from the exit pupil 122 in a direction opposed to the combiner 40 (the virtual image is not represented in Fig. 2c but should be seen in the projection of the projected virtual light-field 110). When the light-field mixed reality system is worn by the viewer, the projected virtual light-field 110 is reflected to the pupil 130 of the viewer's eye 90, such that both the projected virtual light-field 110 and the light from the real world 80 are projected on viewer's eye retina 92.

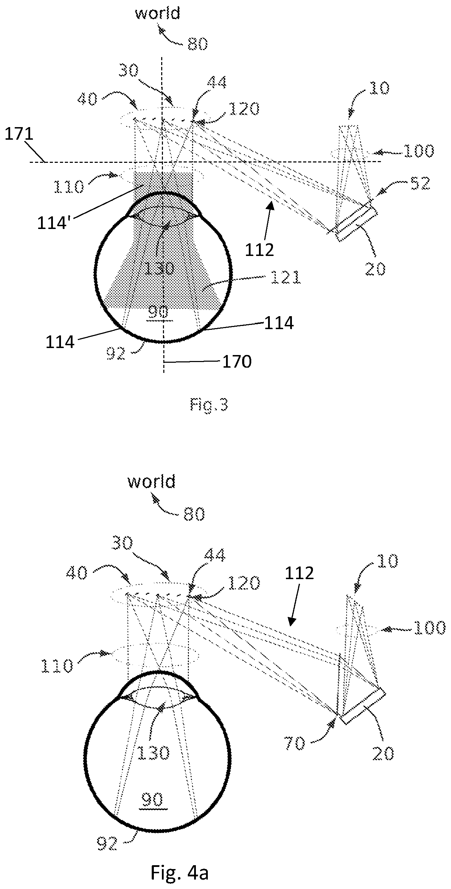

**Fig. 3** shows yet another embodiment, not being covered by the claimed subject-matter, of the light-field mixed reality system, wherein the combiner 40 comprises an array of mirrors 44. The array of mirrors 44 coincides with the exit pupil 122 of pin-lights of the projected virtual light-field 110. The mirrors 44 are inclined so that they can project the projected virtual light-field 110 within the eye-box 121 encompassing a region where the pupil 130 of an viewer's eye 90 can move. In this configuration, the virtual image 114 is formed along the projection axis 170, away from the exit pupil 122 in a direction opposed to the combiner 40. When the light-field mixed reality system is worn by the viewer, a first virtual image 114' is formed close to viewer's eye 90 and the virtual image 114 is formed within the viewer's eye 90, on the retina.

In this configuration, the light-field mixed reality system can comprise a lens 52 configured for functioning as partial collimator and as a pin-light reimaging element (such as a Fourier transform lens). The light-field mixed reality system can further comprise polarization filters in case the SLM 20 uses a FLCOS.

**Fig. 4a** illustrates a variant of the light-field mixed reality system configuration of Fig. 3, wherein the latter comprises a reimaging lens 70 which serves as a pin-light reimaging element (such as a Fourier transform lens).

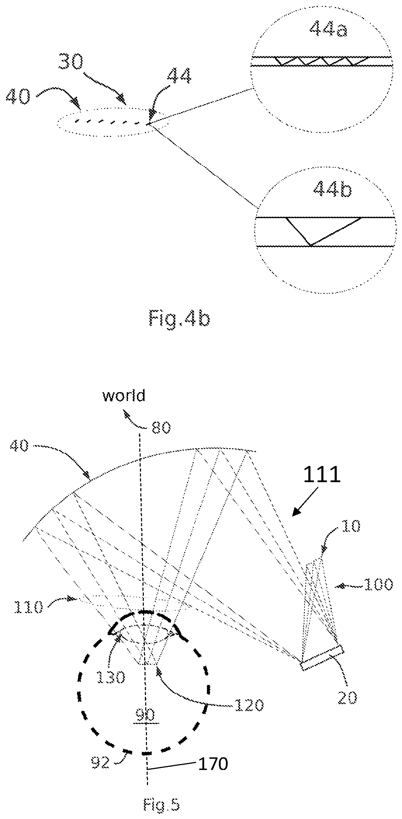

In **Fig. 4b****,** the array of mirrors 44 in the combiner 40 is represented by an array of sub-mirrors arranged in a grating 44a or as a single larger mirror 44b. In both cases, the array of mirrors 44, 44a, 44b is imprinted into a transparent plate. More generally, the array of mirrors can comprise a reflective plane in the transparent plate created by any other suitable means.

The light-field projector does not necessarily require the Fourier filter 30 to deliver acceptable exit pupil 122. This is the case when the virtual image 114 of the SLM 20 is placed out of accommodation range of the observer's eye 90. For instance, this is the case when the virtual image 114 of the SLM 20 is behind the viewer's eye or close (e.g. less than 15 cm) in front of the viewer's eye 90. In such configuration the higher-than-zero order diffraction components of the light modulated by the SLM 20 plays a minor role.

The intensity of higher order diffraction components can be reduced by "randomization" of the modulating image on the SLM 20. An image of each binary subframe appearing on SLM 20 can be specifically transformed in such a way that it reduces appearance of distinct frequencies in the image and, hence, reduces intensity of diffraction satellites in its Fourier transform image at the location of the exit pupil 122. A diffraction filter can be implemented also in the combiner 40 itself as described further below.

**Fig. 5** shows another embodiment wherein the light-field mixed reality system comprises the pin-light array 10, the SLM 20 and the concave and ellipsoid shape, or free-form, combiner 40. Compared to the configuration of Fig. 1, the light-field mixed reality system does not comprise the collimator 50, the beam splitter 60 and the reimaging lens 70. The light-field mixed reality system does also not comprise the Fourier filter 30 such that the modulated virtual light-field 111 is reflected on the combiner 40.

The rejection of "black" i.e. "off" pixels from the optical path can be realized by polarization filters filtering the incident modulated virtual light-field 111 and reflected projected virtual light-field 110 to and from the SLM 20.

The filtering of light modulated by the SLM 20 in the reflected path can be performed by the combiner 40, or by a single polarization filter (not shown) located on the surface of SLM 20, in case the SLM 20 uses a FLCOS. In the case the SLM 20 uses a DMD, the filtering of the light modulated by the SLM 20 in the reflected path can be performed by rejection of higher angles rays corresponding to off-pixels at DMD, from the optical path by the selective angular reflectivity of the combiner 40.

The selective angular reflectivity of the combiner 40 can be obtained by a Bragg grating tuned for reflection of limited range of incident angles of the incident light-field 100 with specific wavelength at the surface of the combiner 40. The Bragg grating can be formed by multilayer deposition of materials with different refraction index or by exposure of a holographic recording medium. The Bragg grating can be formed on the first reflecting surface 43 of the combiner 40, inside the combiner 40 or on the opposite surface of the combiner 40.

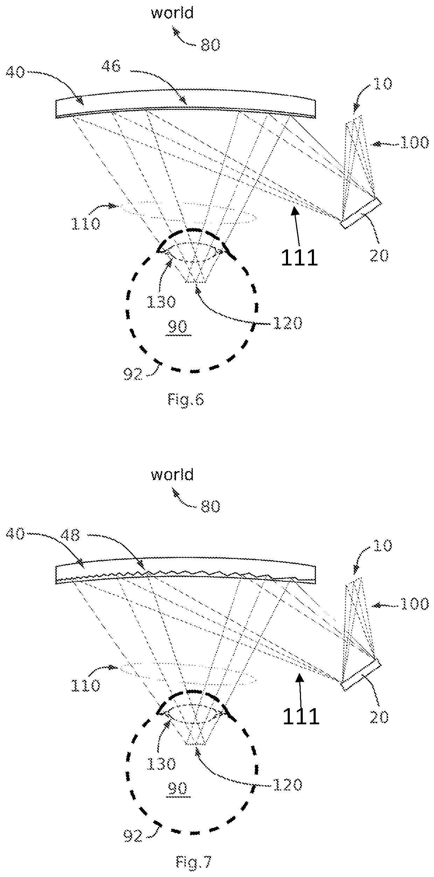

**Fig.** 6 shows a variant, not being covered by the claimed subject-matter, of the embodiment of Fig. 5, wherein the light-field mixed reality system comprises a pin-light array 10, a SLM 20, and wherein the combiner 40 comprises a holographic reflector 46 including a holographic pattern. The holographic reflector 46 can be configured in such a way that the diffraction angles of the modulated virtual light-field 111 are rejected during reflection on the first reflecting surface of the combiner 40. For instance here, the holographic reflector 46 functions as a diffraction filter.

The light-field generation is identical to the previous embodiments, but the combiner 40 provides reflection by the holographic pattern of the reflector 46. The holographic pattern 46 can perform filtering which rejects reflection of higher order diffraction angles and "off-state" angles in the case the SLM 20 uses a DMD.

**Fig. 7** shows another variant, not being covered by the claimed subject-matter, of the embodiment of Fig. 5, wherein the combiner 40 comprises a Fresnel type element 48. The Fresnel type element 48 can be configured in such a way that the diffraction angles of the modulated virtual light-field 111 are rejected during reflection on the first reflecting surface of 43 of the combiner 40.

The Fresnel reflector 48 can be a grated surface with ellipsoid semi-transparent or selectively transparent surfaces which reflect the modulated virtual light-field 111 approximately from one focus of an ellipsoid to another. The grated surface 48 can be embedded as an interface between two transparent materials (such as shown in Fig. 7) which is transparent for majority of the visible light and reflective for the wavelengths of the pin-light array 10 and of the projected virtual light-field 110.

Alternatively or in combination, diffraction angles of the light-field 110 can be reduced by using small enough pitch of the SLM 20, such that the higher-than-zero order diffraction components of the projected virtual light-field 110 will not enter the eye pupil 130.

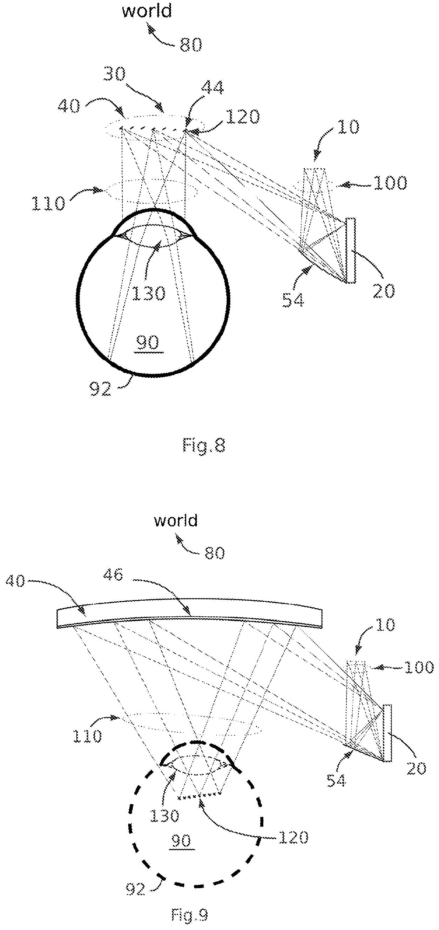

**Fig. 8** depicts another variant, not being covered by the claimed subject-matter, of the light-field mixed reality system configuration of Fig. 3, comprising a free-form reflector 54 functioning as an optical element which forms pin-light virtual images 120 of the pin-lights 10 in the location of inclined micromirrors 44.

**Fig. 9** depicts yet another variant, not being covered by the claimed subject-matter, of the light-field mixed reality system configuration of Fig. 5, wherein the combiner 40 comprises holographic or Fresnel selective reflector 46. The light-field mixed reality system further comprises a free-form reflector 54 functions as an optical element which directs the projected virtual light-field 100 to the SLM 20 and then to the Fresnel selective reflector 46 of the combiner 40. The reflector 54 with the Fresnel selective reflector 46 of the combiner 40 form pin-light virtual images 120 near the viewer's pupil 130.

In the embodiments of Figs. 3-9, the pin-light array 10 and the combiner 40 are located on one side of an axis 171 perpendicular to the projection axis 170. The spatial light modulator 20 is located the opposed side of the axis 171. This configuration is suitable for light-weight small form-factor wearable light-field mixed reality systems.

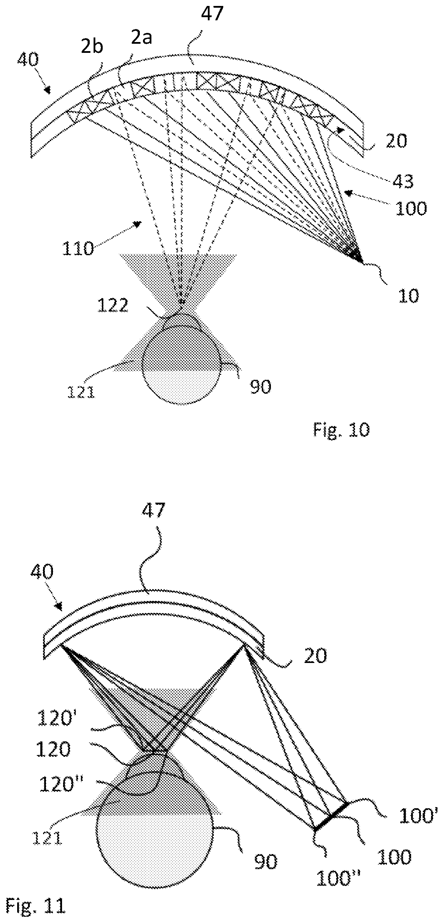

**Figs. 10 and 11** show another embodiment, not being covered by the claimed subject-matter, of the light-field mixed reality system being specially suitable for a small form-factor glasses for mixed reality applications. In this configuration, the pin-light array 10 illuminates directly the combiner 40. The pin-light array 10 is then imaged by the combiner 40 within the exit pupil 122 that can be located in front or behind the viewer's eye 90 depending on the use case. The pin-light array 10 is preferably placed between the combiner 40 and the exit pupil 122.

In the present embodiment, the combiner 40 comprises a glass substrate 47 having the first reflecting surface 43 and an optical light modulator 20 placed on the first reflecting surface 43. The optical light modulator 20 allows to locally modify the propagation of the projected virtual light-field 110 depending on the image that has to be displayed from that particular The pin-light array 10 location. Preferably, the pin-light array 10 illuminates completely the optical light modulator 20.

The optical light modulator 20 can comprise a matrix of micrometric size cells that can be individually set to a transmission state (represented by the numeral 2a in figure 10) or blocking state (represented by the numeral 2b in figure 10) by applying an electric signal to the desired cell. The transmission or blocking state of each cell can typically change within microseconds.

The optical light modulator 20 can be made of an optical phase change material (O-PCM) such as germanium antimony tellurium alloy (Ge2Se2Te5) that can electrically change its phase state from crystalline to amorphous and vice versa. The optical light modulator 20 can also be made of a liquid crystal material that can electrically change its phase state from liquid to crystalline and vice versa.

In the transmission state of the cell, the incident light-field 100 coming from the pin-light array 10 can pass through the optical light modulator 20 and be reflected by the glass substrate 47 toward the eye box region 121 and towards the viewer's eye 90 when the light-field mixed reality system is worn by the viewer. In the blocking state of the cell, the incident light-field 100 coming from pin-light array 10 cannot pass through the optical light modulator 20 and cannot be reflected by the glass substrate 47 toward the eye box region 121.

The glass substrate 47 optical property can be achieved by using a microstructure pattern on the first reflecting surface 43 or within the combiner 40 itself. The glass substrate 47 optical property can be further achieved by using a volume hologram that has been recorded in order to redirect the incident light-field 100 coming from the pin-light array 10 to the pin-light virtual images 120 located the eye box region 121 (in front of the viewer's eye 90).

In Fig. 11, three incident light-field pin-lights 100, 100' and 100" of the pin-light array 10 and the corresponding pin-light virtual images 120, 120' and 120" are shown.

By summing the above described reflection (or no reflection) of the incident light-field 100 on the combiner 40 comprising the glass substrate 47 and the optical light modulator 20 for a plurality of incident light-fields 100 generated by the pin-light array 10, the exit pupil 122 comprising the plurality of pin-light virtual images 121 is formed. When the light-field mixed reality system is worn by the viewer, the exit pupil 122 is located within the viewer's eye, on the retina.

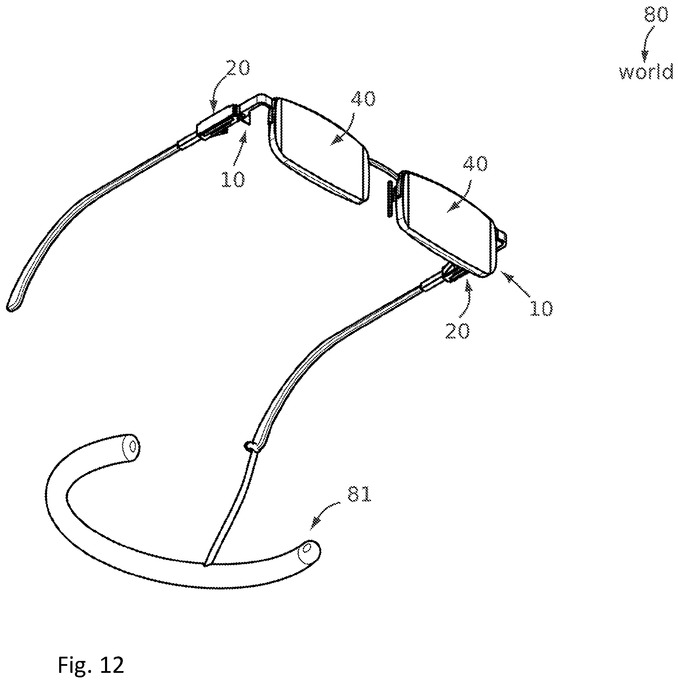

In an embodiment, the light-field mixed reality system can be comprised in a wearable device. **Fig. 12** illustrates a possible configuration of mixed reality glasses 25 comprising the light-field mixed reality system. For instance, the combiner 40 can be comprised in the one of the lenses 24 or in each of them. The pin-light array 10 and the SLM 20 can be comprised in the hinges or another portion of the temples. In the example shown, an additional unit 81 which contains battery and support electronics is provided in an eyewear cord 23. The light-field mixed reality system of the invention can be comprised in any glasses such as prescription or correction glasses.

The pin-light array 10 can comprise a plurality of point-light, each being configured to emit an incident light-field pin-light 100. An active subset can comprise a plurality of active point-lights each emitting incident a light-field pin-light 100. An inactive subset comprises the other point-lights that are inactive and do not emit the incident light-field pin-light 100. The point-lights of the pin-light array 10 being in the active subset and in the inactive subset can be varied in time.

By modifying spatially and temporarily the subset of active point-lights emitting an incident light-field 100 in the pin-light array 10, it is possible to move the position or change the size of exit pupil 122 in which the pin-light virtual images 120 of the active incident light-fields 100 from the pin-light array 10 appear. In combination with eye-tracking of any kind, the exit pupil 122 can be projected always in such way that maximum of projected information enters pupil 91 of a viewer.

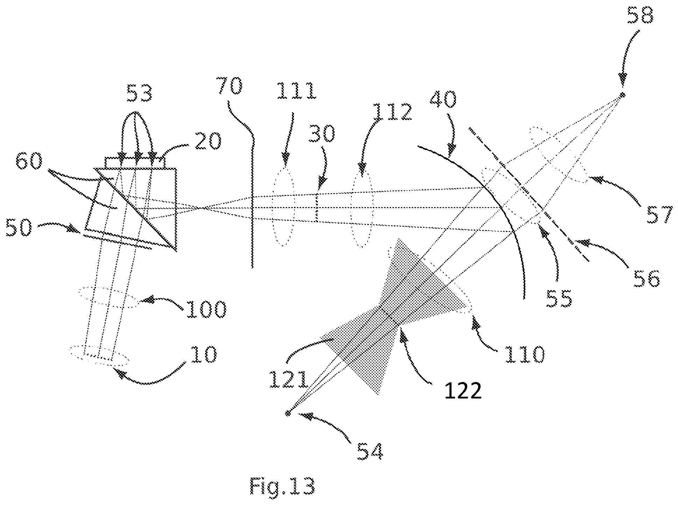

**Fig. 13** shows a light-field mixed reality system similar to the one of Fig. 1, wherein image components 53 are displayed on the optical light modulator 20 (such as a SLM) such that the projected virtual light-field 110 is generated as if it was generated by objects placed in different optical distance in a virtual scene. For instance, the projected virtual light-field 110 is generated as if it was generated by a virtual object point 54 placed, along the projection axis 170, away from the exit pupil 120 in a direction opposed to the combiner 40 (optically behind a viewer's eye). The virtual object point 54 can be placed at a different distances from the exit pupil 120. The optical transformation is performed by displaying image components 53 of the virtual object point 54 at corresponding positions on optical light modulator 20 that are displayed sequentially in sync with the active pin-lights (which determine the directions of the projected rays 111).

The projected virtual light-field 110 can therefore simulates the effects of any optical transformation performed on a virtual correction light-field 57 from a realistic scene such as the virtual correction point 58 by the digital transformation of the image components 53 displayed on the optical light modulator 20. The projected virtual light-field 110 thus allows simulating the effects of a correction (and prescription) lens 56 placed between the eye-box 121 and the region of the real word 80 with the virtual correction point 58. Numeral 55 corresponds to corrected light-rays of incident virtual correction light-field 57, projected through the combiner 40.

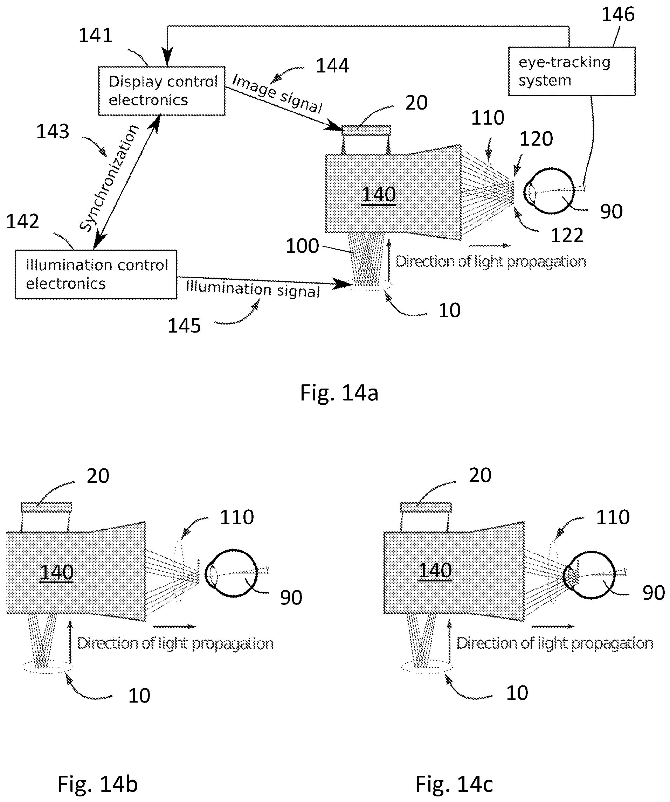

**Fig. 14a** is a diagram representation of the light-field mixed reality system, according to an embodiment. Optical elements such as collimating or partly collimating lens 50, beam splitter 60 and reimaging lens are represented by the box "optics" and the numeral 140. The optics 140 and the optical light modulator 20 guide and optically transform the incident light-field 100 into the modulated virtual light-field 111 and/or modulated and filtered virtual light-field 112. The light-field mixed reality system comprises display control electronics 141 which produces, formats and exports signal which creates an image on the optical light modulator 20. An illumination control electronics 142 produces, formats and exports signal which powers specific point-lights of the pin-light array 10 in a specific time dependent fashion. A synchronization signal 143 transmitted between the display and point-light control electronics 141, 142 controls which image component is illuminated on the optical light modulator 20 and by which specific point-light of the pin-light array 10. An image signal 144 comprises a conditioned electronic signal which creates sequence of image components on optical light modulator 20. An illumination signal 145 comprises a conditioned electronic signal which causes the sequence of light emissions from point-lights in the point-light array 10.

The light-field mixed reality system further comprises a eye-tracking device 146 controlling the display control electronics 141. The eye-tracking device 146 provides information about the orientation of the viewer's eye 90 while the display controls electronics 141 provides images in accordance with the orientation of the viewer's eye 90. The projected virtual light-field 110 is thus projected within the eye box (not shown in Fig. 14a), in accordance with the orientation of the viewer's eye 90.

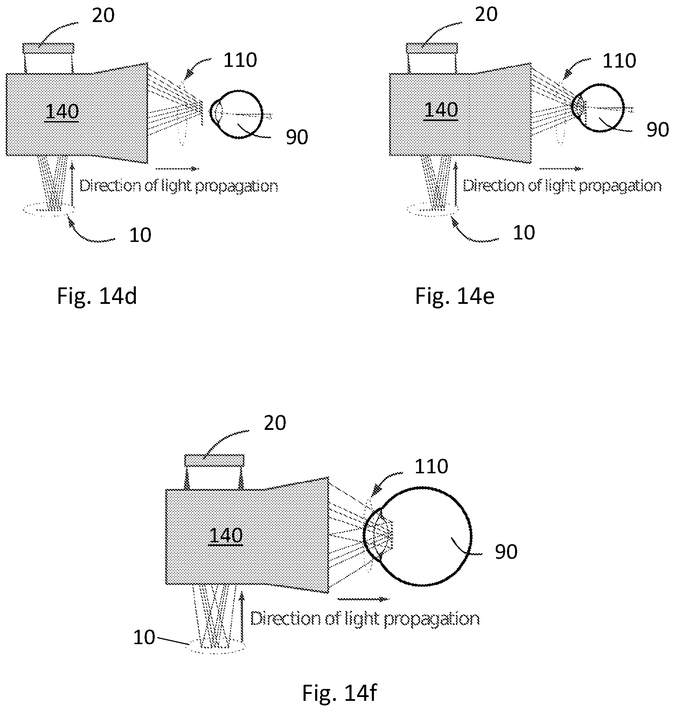

For example, **Figs. 14b** and **14c** show the light-field mixed reality system when the viewer's eye 90 is oriented downwards, for two different distances between the eye 90 and the optics 140. **Figs. 14d** and **14e** show the light-field mixed reality system when the viewer's eye 90 is oriented upwards, for two different distances between the eye 90 and the optics 140. The eye-tracking device 146 detects the viewer's eye 90 orientation and the display control electronics 141 controls the optics 140 such as to provide subsets of projected virtual light-field 110 within the eye box (not shown), in accordance with the viewer's eye orientation. **Fig. 14f** shows a combined representation of Figs 14a-14d of the light-field mixed reality system with the eye-tracking functionality, whereby the exit pupil 122 can be projected in such way that maximum of projected information is always within the eye box 121.

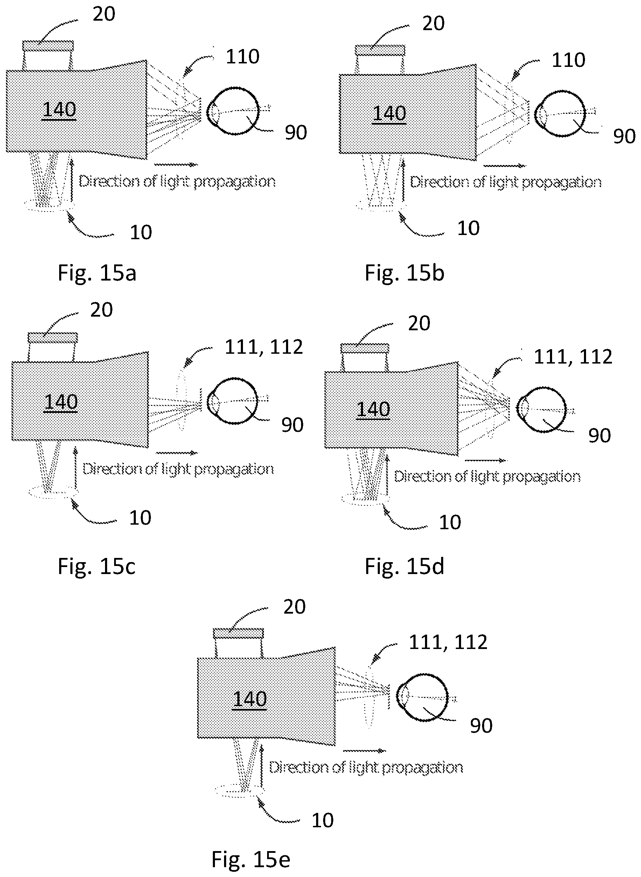

**Figs. 15a** to **15e** show the light-field mixed reality system wherein the eye-tracking device 146 is further configured to control the display control electronics 141 in order to take account of the moving eye-box and of the field of view (FOV) of the viewer. To that end, the light-field mixed reality system is configured to generate the projected virtual light-field 110 with high angular resolution image in a narrow FOV and low angular resolution image for wide FOV. The light-field mixed reality system can comprise a FOV optical device (not shown) configured for interacting with the projected virtual light-field 110, by spatially shifting at least a subset of the projected virtual light-field 110 in the plane of the virtual image 114 and also possibly along the projection axis 170. The FOV optical device can comprise a deflecting prism and/or an offsetting lens, deflecting the projected virtual light-field 110 by a predetermined angle. The FOV optical device can further comprise an imaging lens configured to shift the virtual image 114 of at least a subset of the projected virtual light-field 110 along the projection axis 170.

Figs. 15a-15c show the light-field mixed reality system generating the projected virtual light-field 110 with high angular resolution image in a narrow FOV (Fig. 15c), with low angular resolution image for wide FOV (Fig. 15b) and a combination of the two (Fig. 15a), when the viewer's eye 90 is oriented downwards. Figs. 15d and 15e show the light-field mixed reality system projecting the projected virtual light-field 110 with high angular resolution image in a narrow FOV (Fig. 15e) and a combination of the high and low angular resolution image (Fig. 15f), when the viewer's eye 90 is oriented upwards.

The moving narrow FOV part is called foveation. It projects high-resolution light-field into eye fovea. If the projected virtual light-field 110 is projected sequentially, even the wide FOV part can provide light-field. The sequential projection allows for stitching the narrow and wide FOV images. The wide FOV part can have low angular resolution and color resolution, including only binary color resolution.

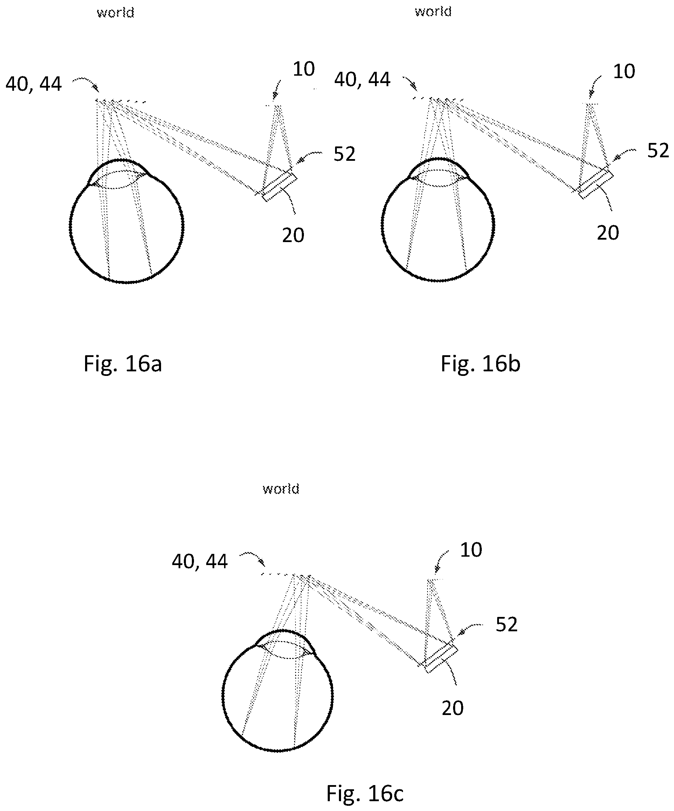

**Figs. 16a-16c** show an exemplary configuration of the light-field mixed reality system, wherein the combiner 40 comprises a moving eye-box including micro-mirrors 44. The moving eye-box 40 is controlled by the eye-tracking device 146 and moves in accordance to the viewer's eye 90 orientation such as to provide subsets of the projected virtual light-field 110 within the eye box (not shown), in accordance with the viewer's eye orientation.

### Reference Numbers and Symbols

- 10: pin-light array
- 2a: transmission state
- 2b: blocking state
- 20: optical light modulator, spatial light modulator (SLM),
- 21: temples
- 22: hinges
- 23: eyewear cord
- 24: lenses
- 25: mixed reality glasses
- 30: Fourier filter
- 32: SLM reimaging lens
- 40: combiner
- 41: first element
- 42: second element
- 43: first reflecting surface
- 44: array of mirrors
- 45: second reflecting surface
- 46: holographic or Fresnel reflector
- 47: glass substrate
- 48: Fresnel type combiner
- 50: collimating or partly collimating lens
- 52: lens
- 53: image components
- 54: virtual object point
- 55: corrected light-rays
- 56: virtual correction lens
- 57: virtual correction light-field
- 58: virtual correction point
- 60: beam splitter
- 70: reimaging lens
- 80: light-field coming from the real world
- 81: additional unit
- 90: observer's eye
- 91: eye's lens
- 92: retina
- 100: incident light-field
- 101, 101', 101": pinhole-aperture light-fields
- 110: projected virtual light-field
- 111: modulated virtual light-field
- 112: modulated and filtered virtual light-field
- 114: virtual image
- 114': first virtual image
- 120: pin-light virtual image
- 121: eye box region
- 122: pin-light virtual image aperture, exit pupil
- 130: pupil
- 140: optics
- 141: display control electronics
- 142: illumination control electronics
- 143: synchronization signal
- 144: image signal
- 145: illumination signal
- 146: eye-tracking device
- 170: projection axis
- 171: axis perpendicular to the projection axis

## Claims

1. Light-field mixed reality system to be worn by a viewer, comprising:
a pin-light array (10) generating an incident light-field (100) illuminating a spatial light modulator (20), SLM;
the SLM (20) being configured for modulating the incident light-field (100) and generating a modulated virtual light-field (111); and
a combiner (40) configured for reflecting the modulated virtual light-field (111) and projecting a projected virtual light-field (110) defining an eye box region (121) along a projection axis (170);
wherein the combiner (40) is further configured for transmitting natural light from the real world (80) towards the eye box (121), such that both projected virtual light-field (110) and natural light (80) are projected, via the combiner (40), within the eye box (121);
wherein the projected virtual light-field (110) further forms an exit pupil (122) of the pin-light array (10) comprising a plurality of pin-light virtual images (120), within the eye box (121) and a virtual image (114) of the SLM (20), along the projection axis (170):
**characterized in that** the system comprises a lens (52) configured to collimate and reimage the pin-light array (10) and, when the light-field mixed reality system is worn by the viewer, form the virtual image (114) in front of the exit pupil (122), namely at a distance less than 15 cm from the exit pupil (122) between the combiner (40) and the exit pupil (122), or
wherein the system comprises a lens (52) configured to collimate and reimage the pin-light array (10), and a SLM reimaging lens (32) configured to, when the light-field mixed reality system is worn by the viewer, form a first virtual image (114') between the SLM (20) and the combiner (40), and form the virtual image (114) behind the exit pupil (122), namely away from the exit pupil (122) in a direction opposed to the combiner (40).

2. The system according to claim 1,
wherein said combiner (40) comprises a semi-transparent first element (41) including a first reflecting surface (43) having a concave and ellipsoid shape, such that the projected virtual light-field (110) is reflected at one of the focal points.

3. The system according to claim 1 or 2,
comprising the SLM reimaging lens (32), wherein the combiner (40) further comprises a semi-transparent second element (42) having a substantially flat semi-transparent reflecting surface (45) reflecting for the virtual light-field (112) towards the first reflecting surface (43) of the first element (41).

4. The system according to claim 3,
wherein the first element (41) and the second element (42) transmit the natural light (80) towards the viewer's eye (90).

5. The system according to any one of claims 1 to 4,
wherein the combiner (40) is configured for reflecting narrow spectral bands of the virtual light-field (112) while transmitting all or most of the other visible wavelengths from the natural light (80).

6. The system according to any one of claims 1 to 5,
wherein the pin-light array (10) and the combiner (40) are located on one side of an axis (171) perpendicular to the projection axis (170); and wherein the SLM (20) is located the opposed side of the axis (171).

7. The system according to any one of claims 1 to 6,
wherein the pin-light array (10) comprises a plurality of active points lights emitting incident a light-field pin-light (100) and of inactive non-emitting points lights; and
wherein the spatial arrangement of the active points lights and inactive points lights in the pin-light array (10) can be varied in time such as to vary the position or change the size of exit pupil (122).

8. The system according to any one of claims 1 to 7,
wherein image components (53) are displayed on the SLM (20) such that the projected virtual light-field (110) simulates the effects of an optical transformation performed on a virtual correction light-field (57) from a realistic scene, such as a virtual correction point (58) by the digital transformation of the image components (53) displayed on the SLM (20).

9. The system according to claim 8,
wherein the projected virtual light-field (110) allows simulating the effects of a correction lens (56) placed between the eye-box (121) and the region of the real word (80).

10. The system according to any one of claims 1 to 9,
further comprising an eye-tracking device (146) providing information about the orientation of a viewer's eye (90), such that the projected virtual light-field (110) is projected within the eye box (121), in accordance with the viewer's eye (90) orientation.

11. The system according to claim 10,
wherein the eye-tracking device (146) is further configured for spatially shifting at least a subset of the projected virtual light-field (110) in the plane of the virtual image (114).

12. A wearable device comprising the light-field mixed reality system according to any one of claims 1 to 11.

## Patentansprüche

1. Lichtfeld-Mixed-Reality-System, welches von einem Betrachter getragen werden kann, umfassend:
ein Pin-Light-Array (10), das ein einfallendes Lichtfeld (100) erzeugt, welches einen räumlichen Lichtmodulator (20), SLM, beleuchtet;
wobei der SLM (20) dazu konfiguriert ist, um das einfallende Lichtfeld (100) zu modulieren und ein moduliertes virtuelles Lichtfeld (111) zu erzeugen; und
einen Kombinierer (40), der dazu konfiguriert ist, um das modulierte virtuelle Lichtfeld (111) zu reflektieren und ein projiziertes virtuelles Lichtfeld (110) zu projizieren, welches eine Eyebox-Region (121) entlang einer Projektionsachse (170) definiert;
worin der Kombinierer (40) zudem dazu konfiguriert ist, um natürliches Licht aus der realen Welt (80) in Richtung der Eyebox (121) durchzulassen, sodass sowohl das projizierte virtuelle Lichtfeld (110) als auch das natürliche Licht (80) über den Kombinierer (40) in die Eyebox (121) projiziert werden;
worin das projizierte virtuelle Lichtfeld (110) zudem eine Austrittspupille (122) des Pin-Light-Arrays (10) bildet, welche eine Vielzahl von virtuellen Pin-Light-Bildern (120) innerhalb der Eyebox (121) und ein virtuelles Bild (114) des SLM (20) entlang der Projektionsachse (170) umfasst;
**dadurch gekennzeichnet, dass** das System eine Linse (52) umfasst, die dazu konfiguriert ist, das Pin-Light-Array (10) zu kollimieren und neu abzubildeen und, wenn das Lichtfeld-Mixed-Reality-System vom Betrachter getragen wird, das virtuelle Bild (114) vor der Austrittspupille (122) zu bilden, nämlich in einem Abstand von weniger als 15 cm von der Austrittspupille (122) zwischen dem Kombinierer (40) und der Austrittspupille (122), oder
worin das System eine Linse (52) umfasst, die dazu konfiguriert ist, um das Pin-Light-Array (10) zu kollimieren und neu abzubilden, und eine SLM-Abbildungslinse (32) umfasst, die dazu konfiguriert ist, um, wenn das Lichtfeld-Mixed-Reality-System vom Betrachter getragen wird, ein erstes virtuelles Bild (114') zwischen dem SLM (20) und dem Kombinierer (40) zu bilden und das virtuelle Bild (114) hinter der Austrittspupille (122) zu bilden, nämlich entfernt von der Austrittspupille (122) in einer dem Kombinierer (40) entgegengesetzten Richtung.

2. System gemäss Anspruch 1, worin der besagte Kombinierer (40) ein halbdurchlässiges erstes Element (41) umfasst, welches eine erste reflektierende Oberfläche (43) mit einer konkaven und ellipsoiden Form aufweist, sodass das projizierte virtuelle Lichtfeld (110) an einem der Brennpunkte reflektiert wird.

3. System gemäss Anspruch 1 oder 2, umfassend die SLM-Abbildungslinse (32), worin der Kombinierer (40) zudem ein halbdurchlässiges zweites Element (42) mit einer im Wesentlichen flachen, halbdurchlässigen reflektierenden Oberfläche (45) aufweist, welche das virtuelle Lichtfeld (112) in Richtung der ersten reflektierenden Oberfläche (43) des ersten Elements (41) reflektiert.

4. System gemäss Anspruch 3, worin das erste Element (41) und das zweite Element (42) das natürliche Licht (80) in Richtung des Auges (90) des Betrachters übermitteln.

5. System gemäss irgendeinem der Ansprüche 1 bis 4, worin der Kombinierer (40) dazu konfiguriert ist, um schmale Spektralbereiche des virtuellen Lichtfelds (112) zu reflektieren, während er alle oder die meisten anderen sichtbaren Wellenlängen des natürlichen Lichts (80) durchlässt.

6. System gemäss irgendeinem der Ansprüche 1 bis 5, worin das Pin-Light-Array (10) und der Kombinierer (40) auf einer Seite einer Achse (171) senkrecht zur Projektionsachse (170) angeordnet sind; und worin der SLM (20) auf der gegenüberliegenden Seite der Achse (171) angeordnet ist.

7. System gemäss irgendeinem der Ansprüche 1 bis 6, worin das Pin-Light-Array (10) eine Vielzahl von aktiven Punktlichtern, die ein einfallendes Pin-Light-Lichtfeld (100) emittieren, und von inaktiven, nicht emittierenden Punktlichtern umfasst; und worin die räumliche Anordnung der aktiven Punktlichter und der inaktiven Punktlichter im Pin-Light-Array (10) zeitlich variiert werden kann, um die Position der Austrittspupille (122) zu variieren oder deren Grösse zu ändern.

8. System gemäss irgendeinem der Ansprüche 1 bis 7, worin Bildkomponenten (53) auf dem SLM (20) so angezeigt werden, dass das projizierte virtuelle Lichtfeld (110) die Effekte einer optischen Transformation simuliert, die an einem virtuellen Korrekturlichtfeld (57) einer realistischen Szene durchgeführt wird, wie beispielsweise an einem virtuellen Korrekturpunkt (58) durch die digitale Transformation der auf dem SLM (20) angezeigten Bildkomponenten (53).

9. System gemäss Anspruch 8, worin das projizierte virtuelle Lichtfeld (110) die Simulation der Effekte einer Korrekturlinse (56) ermöglicht, die zwischen der Eyebox (121) und dem Bereich der realen Welt (80) angeordnet ist.

10. System gemäss irgendeinem der Ansprüche 1 bis 9, zudem umfassend eine Eye-Tracking-Vorrichtung (146), welche Informationen über die Ausrichtung des Auges (90) eines Betrachters liefert, sodass das projizierte virtuelle Lichtfeld (110) in Übereinstimmung mit der Ausrichtung des Auges (90) des Betrachters in die Eyebox (121) projiziert wird.

11. System gemäss Anspruch 10, worin die Eye-Tracking-Vorrichtung (146) zudem dazu konfiguriert ist, um mindestens eine Untergruppe des projizierten virtuellen Lichtfelds (110) in der Ebene des virtuellen Bildes (114) räumlich zu verschieben.

12. Am Körper tragbare Vorrichtung (Wearable Device), umfassend das Lichtfeld-Mixed-Reality-System gemäss einem der Ansprüche 1 bis 11.

## Revendications

1. Système de réalité mixte à champ lumineux destiné à être porté par un observateur, comprenant:
un réseau de sources ponctuelles (10) générant un champ lumineux incident (100) illuminant un modulateur spatial de lumière (20), SLM;
le SLM (20) étant configuré pour moduler le champ lumineux incident (100) et générer un champ lumineux virtuel modulé (111); et
un combineur (40) configuré pour réfléchir le champ lumineux virtuel modulé (111) et projeter un champ lumineux virtuel projeté (110) définissant une région de boîte oculaire (121) selon un axe de projection (170);
le combineur (40) étant en outre configuré pour transmettre la lumière naturelle du monde réel (80) vers la boîte oculaire (121), de sorte que le champ lumineux virtuel projeté (110) et la lumière naturelle (80) soient tous deux projetés, via le combineur (40), dans la boîte oculaire (121);
le champ lumineux virtuel projeté (110) formant en outre une pupille de sortie (122) du réseau de sources ponctuelles (10) comprenant une pluralité d'images virtuelles de sources ponctuelles (120), dans la boîte oculaire (121) et une image virtuelle (114) du SLM (20), selon l'axe de projection (170);
**caractérisé en ce que** le système comprend une lentille (52) configurée pour collimater et réimager le réseau de sources ponctuelles (10) et, lorsque le système de réalité mixte à champ lumineux est porté par l'observateur, former l'image virtuelle (114) en avant de la pupille de sortie (122), à savoir à une distance inférieure à 15 cm de la pupille de sortie (122) entre le combineur (40) et la pupille de sortie (122), ou
le système comprend une lentille (52) configurée pour collimater et réimager le réseau de sources ponctuelles (10), et une lentille de réimagerie du SLM (32) configurée pour, lorsque le système de réalité mixte à champ lumineux est porté par l'observateur, former une première image virtuelle (114') entre le SLM (20) et le combineur (40), et former l'image virtuelle (114) en arrière de la pupille de sortie (122), à savoir éloignée de la pupille de sortie (122) dans une direction opposée au combineur (40).

2. Le système selon la revendication 1,
le combineur (40) comprenant un premier élément semi-transparent (41) incluant une première surface réfléchissante (43) présentant une forme concave et ellipsoïdale, de sorte que le champ lumineux virtuel projeté (110) est réfléchi en l'un des foyers.

3. Le système selon la revendication 1 ou 2,
comprenant la lentille de réimagerie du SLM (32), le combineur (40) comprenant en outre un deuxième élément semi-transparent (42) présentant une surface réfléchissante semi-transparente sensiblement plane (45) réfléchissant le champ lumineux virtuel (112) vers la première surface réfléchissante (43) du premier élément (41).

4. Le système selon la revendication 3,
le premier élément (41) et le deuxième élément (42) transmettant la lumière naturelle (80) vers l'œil de l'observateur (90).

5. Le système selon l'une des revendications de 1 à 4,
le combineur (40) étant configuré pour réfléchir des bandes spectrales étroites du champ lumineux virtuel (112) tout en transmettant toutes ou la plupart des autres longueurs d'onde visibles de la lumière naturelle (80).

6. Le système selon l'une des revendications de 1 à 5,
e réseau de sources ponctuelles (10) et le combineur (40) étant situés d'un côté d'un axe (171) perpendiculaire à l'axe de projection (170); et
le SLM (20) étant situé du côté opposé de l'axe (171).

7. Le système selon l'une des revendications de 1 à 6,
le réseau de sources ponctuelles (10) comprenant une pluralité de sources ponctuelles actives émettant un champ lumineux incident de sources ponctuelles (100) et de sources ponctuelles inactives non-émettantes ; et
l'arrangement spatial des sources ponctuelles actives et des sources ponctuelles inactives dans le réseau de sources ponctuelles (10) pouvant varier dans le temps de manière à modifier la position ou changer la taille de la pupille de sortie (122).

8. Le système selon l'une des revendications de 1 à 7,
des composantes d'image (53) étant affichées sur le SLM (20) de sorte que le champ lumineux virtuel projeté (110) simule les effets d'une transformation optique effectuée sur un champ lumineux virtuel de correction (57) d'une scène réaliste, telle qu'un point de correction virtuel (58) par la transformation numérique des composantes d'image (53) affichées sur le SLM (20).

9. Le système selon la revendication 8,
le champ lumineux virtuel projeté (110) permettant de simuler les effets d'une lentille de correction (56) placée entre la boîte oculaire (121) et la région du monde réel (80).

10. Le système selon l'une des revendications de 1 à 9,
comprenant en outre un dispositif de suivi oculaire (146) fournissant des informations sur l'orientation de l'œil d'un observateur (90), de sorte que le champ lumineux virtuel projeté (110) soit projeté dans la boîte oculaire (121), conformément à l'orientation de l'œil de l'observateur (90).

11. Le système selon la revendication 10,
le dispositif de suivi oculaire (146) étant en outre configuré pour décaler spatialement au moins un sous-ensemble du champ lumineux virtuel projeté (110) dans le plan de l'image virtuelle (114).

12. Dispositif portable comprenant le système de réalité mixte à champ lumineux selon l'une quelconque des revendications 1 à 11.
